# DEMANDE DE BREVET EUROPEEN

(11) **EP 2 175 184 A1**
(43) Date de publication de la demande: **14.04.2010**
(21) Numéro de dépôt: 09305940.0
(22) Date de dépôt: 05.10.2009
(51) Int. Cl.: F16L 11/08, F16L 9/12, B29C 53/08

(54) **Tuyau composite adapté pour transporter indistinctement un combustible hydrocarbure ou un fluide hydraulique**

(30) Priorité: 07.10.2008 FR 0856772
(71) Demandeur: AERAZUR, 92130 Issy les Moulineaux (FR)
(72) Inventeur: Le Morvan, Christophe, 76350, OISSEL (FR)
(74) Mandataire: Kedinger, Jean-Paul

(57) **Abrégé**

La présente invention se rapporte à un tuyau composite (1) adapté pour transporter indistinctement un combustible hydrocarbure ou un fluide hydraulique, **caractérisé en ce qu**'il comprend une gaine centrale creuse (10) réalisée en matière thermoplastique thermoformée et une gaine externe (20) constituée de plusieurs couches superposées radialement (22, 24) comportant au moins une couche de résine (24) disposée au contact direct de la gaine centrale (10) et une couche de fibres (22) recouvrant la couche de résine (24).

## Description

La présente invention concerne un tuyau composite adapté pour transporter indistinctement un combustible hydrocarbure ou un fluide hydraulique, en particulier dans le domaine aéronautique.

Actuellement, les aéronefs tels que les avions ou les hélicoptères comportent de nombreuses conduites de transport de fluide, qu'il s'agisse de combustibles, tels que des hydrocarbures comme le kérosène, ou d'un fluide hydraulique tel que de l'huile.

Or, certaines de ces conduites sont réalisées en métal (inox, aluminium, laiton). Elles sont donc lourdes, compliquées et coûteuses à réaliser en raison de leur formes parfois complexes, et difficiles à implanter car assez rigides.

Un but de la présente invention est donc de résoudre les problèmes cités précédemment à l'aide d'une solution simple à mettre en oeuvre, fiable et moins coûteuse.

Ainsi, la présente invention a pour objet un tuyau composite adapté pour transporter indistinctement un combustible hydrocarbure ou un fluide hydraulique, caractérisé en ce qu'il comprend une gaine centrale creuse réalisée en matière thermoplastique thermoformée et une gaine externe constituée de plusieurs couches superposées radialement comportant au moins une couche de résine disposée au contact direct de la gaine centrale et une couche de fibres recouvrant la couche de résine.

Selon des modes de réalisation préférés, le tuyau selon la présente invention comprend en outre l'une au moins des caractéristiques suivantes :
- la gaine externe est constituée par une alternance de couches de résine et de fibres, et au minimum par une couche de fibres prise en sandwich entre deux couches de résine ;
- la gaine centrale est réalisée dans un matériau thermoplastique choisi dans le groupe constitué de polyamide (PA), polyoxyméthylène (POM), Polyéthylétherkétone (PEEK), polyester, polysulfone (PSU), polysulfure de phénylène (PPS), polyimide (PI), polyamide-imide (PAI) et polyfluorure de vinylidène (PVDF) et autre fluorés ;
- chaque couche de résine est réalisée en époxy, polyester, phénol ou vinylester ;
- chaque couche de fibres est réalisée à base de fibre de verre, de carbone, de Kevlar ou de lin, ou un mélange de ces fibres ;
- la gaine centrale est thermoformée à la forme désirée, notamment pour lui donner sa courbure finale ;
- des raccords, par exemple de type en « Y », en « T » ou en « L », sont liées aux extrémités du tuyau, en particulier autour de la gaine centrale ; et
- les couches externes enrobent une partie des raccords liés à la gaine centrale.

La présente invention se rapporte également à un procédé pour réaliser un tuyau composite adapté pour transporter indistinctement un combustible hydrocarbure ou un fluide hydraulique, caractérisé en ce qu'il consiste à enrober une gaine centrale creuse réalisée en matière thermoplastique à l'aide d'une gaine externe constituée de plusieurs couches superposées radialement et comportant au moins une couche de résine disposée au contact direct de la gaine centrale et une couche de fibres recouvrant la couche de résine.

Avantageusement, la gaine centrale est préalablement thermoformée, par cintrage à chaud, pour lui donner sa courbure finale, avant d'être recouverte par la gaine externe.

L'invention concerne également l'utilisation du tuyau tel que décrit précédemment pour la circulation indistinctement d'un hydrocarbure tel que du fuel ou du kérosène ou d'un fluide hydraulique tel que de l'huile, en particulier dans l'industrie aéronautique.

L'invention va maintenant être décrite plus en détail en référence à un mode de réalisation particulier donné à titre d'illustration uniquement et représentés sur les figures dans lesquelles :
- la figure 1 est une vue en perspective écorchée d'un tuyau conforme à la présente invention ; et
- la figure 2 est une vue en coupe représentant le tuyau en entier, d'une extrémité à l'autre.

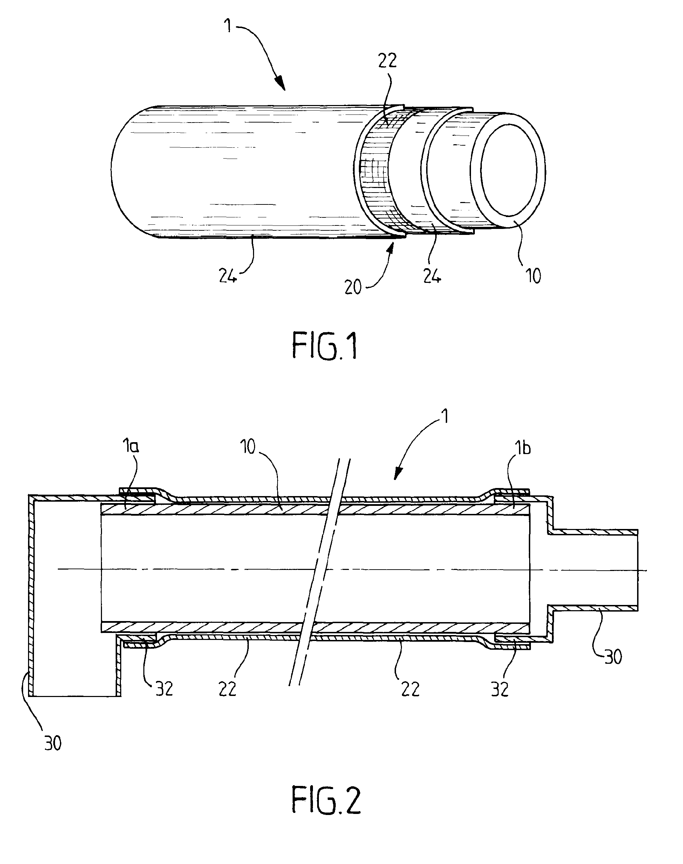

Ainsi, un tuyau 1 de circulation de fluide conforme à la présente invention est représenté sur la figure 1.

Ce tuyau 1 comporte une gaine centrale creuse 10, ou tube primaire, réalisée en matière thermoplastique thermoformée et une gaine externe 20 constituée de plusieurs couches superposées radialement.

Plus précisément, la gaine externe 20 est constituée par une alternance de couches de résine et de fibres, et au minimum par une couche de fibres 22 prise en sandwich entre deux couches de résine 24 dont une est liée étroitement à la gaine centrale.

Concernant le choix des matériaux, la gaine centrale 10 est réalisée dans un matériau thermoplastique choisi dans le groupe constitué de polyamide (PA), polyoxyméthylène (POM), Polyéthylétherkétone (PEEK), polyester, polysulfone (PSU), polysulfure de phénylène (PPS), polyimide (PI), polyamide-imide (PAI) et polyfluorure de vinylidène (PVDF) et autre fluorés.

Chaque couche de résine 24 est réalisée en époxy et chaque couche de fibres 22 est réalisée à base de fibre de verre, de carbone ou de Kevlar.

Afin de lui donner sa forme finale, notamment sa courbure, l'invention porte également sur le fait qu'au cours du procédé de réalisation du tuyau, la gaine centrale 10 est thermoformée par cintrage à chaud à la forme désirée avant d'être recouverte par la gaine externe 20.

Des raccords 30, par exemple de type en « Y », en « T » ou en « L », sont liées aux extrémités 1a et 1b du tuyau 1, en particulier autour de la gaine centrale 10. Plus précisément, comme cela est représenté sur la figure 2, les couches externes, notamment la première couche en résine 24, enrobent une partie 32 des raccords 30 liés à la gaine centrale 10.

Un tel tuyau 1 permet ainsi, de par sa conception, la circulation indistinctement d'un hydrocarbure tel que du fuel ou du kérosène ou d'un fluide hydraulique tel que de l'huile, en particulier dans l'industrie aéronautique.

Un tel tuyau mesure par exemple de 12 mm à 130 mm et fonctionne dans une plage de température allant de -55°C à + 125°C sous une pression allant de pressions négatives à plusieurs milliers de Psig.

Il va de soi que la description détaillée de l'objet de l'Invention, donnée uniquement à titre d'illustration, ne constitue en aucune manière une limitation, les équivalents techniques étant également compris dans le champ de la présente invention.

Ainsi, d'autres matériaux peuvent être prévus pour d'autres utilisations. En particulier, chaque couche de résine peut être une résine polyester, phénolique ou vinylester. De même, la couche de fibres peut être à ase de carbone, de kevlar de lin ou de mélanges de ces fibres.

## Revendications

1. Tuyau composite (1) adapté pour transporter indistinctement un combustible hydrocarbure ou un fluide hydraulique, comprenant une gaine centrale creuse (10) réalisée en matière thermoplastique thermoformée et une gaine externe (20) constituée de plusieurs couches superposées radialement (22, 24) comportant au moins une couche de résine (24) disposée au contact direct de la gaine centrale (10) et une couche de fibres (22) recouvrant la couche de résine (24), **caractérisé en ce que** la gaine centrale (10) est thermoformée à la forme désirée, notamment pour lui donner sa courbure finale.

2. Tuyau selon la revendication, **caractérisé en ce que** la gaine externe est constituée par une alternance de couches de résine (24) et de couches de fibres (22), et au minimum par une couche de fibres (22) prise en sandwich entre deux couches de résine (24).

3. Tuyau selon la revendication 1 ou 2, **caractérisé en ce que** la gaine centrale (10) est réalisée dans un matériau thermoplastique choisi dans le groupe constitué de polyamide (PA), polyoxyméthylène (POM), Polyéthylétherkétone (PEEK), polyester, polysulfone (PSU), polysulfure de phénylène (PPS), polyimide (PI), polyamide-imide (PAI) et polyfluorure de vinylidène (PVDF) et autre fluorés.

4. Tuyau selon l'une quelconque des revendications précédentes, **caractérisé en ce que** chaque couche de résine (24) est réalisée en époxy, polyester, phénol ou vinylester.

5. Tuyau selon l'une quelconque des revendications précédentes, **caractérisé en ce que** chaque couche de fibres (22) est réalisée à base de fibre de verre, de carbone, de Kevlar ou de lin, ou d'un mélanges de ces fibres.

6. Tuyau selon l'une quelconque des revendications précédentes, **caractérisé en ce que** des raccords (30), par exemple de type en « Y », en « T » ou en « L », sont liées aux extrémités (1a, 1b) du tuyau (1), en particulier autour de la gaine centrale (10).

7. Tuyau selon la revendication 6, **caractérisé en ce que** les couches externes (22, 24) enrobent une partie (32) des raccords (30) liés à la gaine centrale (10).

8. Procédé pour réaliser un tuyau composite (1) adapté pour transporter indistinctement un combustible hydrocarbure ou un fluide hydraulique, consistant à enrober une gaine centrale creuse (10) réalisée en matière thermoplastique à l'aide d'une gaine externe (20) constituée de plusieurs couches (22, 24) superposées radialement et comportant au moins une couche de résine (24) disposée au contact direct de la gaine centrale (10) et une couche de fibres (22) recouvrant la couche de résine (24), **caractérisé en ce que** la gaine centrale (10) est préalablement thermoformée, par cintrage à chaud, pour lui donner sa courbure finale, avant d'être recouverte par la gaine externe (20).

9. Utilisation du tuyau (1) selon l'une quelconque des revendications 1 à 7 pour la circulation indistinctement d'un hydrocarbure tel que du fuel ou du kérosène ou d'un fluide hydraulique tel que de l'huile, en particulier dans l'industrie aéronautique.
